# EUROPEAN PATENT APPLICATION

(11) **EP 3 689 688 A1**
(43) Date of publication of application: **05.08.2020**
(21) Application number: 18855774.8
(22) Date of filing: 25.04.2018
(51) Int. Cl.: B60S 5/06

(54) **AUTOMATIC BATTERY CHANGING SYSTEM FOR ELECTRIC VEHICLE**

(30) Priority: 12.09.2017 CN 201710818951; 14.12.2017 CN 201711342320
(71) Applicant: Nio Co., Ltd., Shanghai 201804 (CN)
(72) Inventor: BENGTSSON, Jan, Jiading Shanghai 201804 (CN); LI, Nan, Jiading Shanghai 201804 (CN); TIAN, Xiaotao, Jiading Shanghai 201804 (CN); DING, Xikun, Jiading Shanghai 201804 (CN); MA, Yongyue, Jiading Shanghai 201804 (CN)
(74) Representative: Vossius & Partner Patentanwälte Rechtsanwälte mbB
(86) International application number: PCT/CN2018/084433
(87) International publication number: WO 2019/052184

(57) **Abstract**

The invention relates to an automated battery swap system for an electric vehicle, the automated battery swap system comprising: a battery swap platform (1) for supporting and positioning a vehicle; a hoisting device (2) provided on the battery swap platform (1) for hoisting the vehicle to a first preset height, the first preset height being the height of the vehicle, when in place for battery swapping, from the battery swap platform (1); a battery pack management device (3) provided on one side of the battery swap platform (1) for receiving a used battery pack and supplying a fresh battery pack; a guide rail (4) with one end extending into the battery swap platform (1) and the other end extending to the battery pack management device (3); and a battery swap trolley (5) provided on the guide rail (4) and capable of reciprocating along the guide rail (4) to complete the transportation of a battery pack between the vehicle and the battery pack management device (3). The automated battery swap system is easy to operate and implement, provides a high-precision and high-efficiency battery swap service, and can be applied to various places.

## Description

### Technical Field

The invention relates to the technical field of battery swapping for an electric vehicle, and in particular to an automated battery swap system for an electric vehicle.

### Background Art

Electric vehicles are means of transportation that can be driven by electric energy stored in batteries, and thus reduce the vehicle's dependence on fossil fuels. The electric vehicle is an important measure to solve the national energy security problem. Traction batteries are the core of electric vehicles, and the range provided by a traction battery per charge is a major concern for users and companies. Therefore, how to quickly and conveniently replenish the traction battery becomes an important factor in the use and promotion of electric vehicles. However, the current battery charging technology cannot complete the charging within a few minutes like refueling. Hence, battery swapping currently becomes a high-efficiency and convenient electric energy supplement method for an electric vehicle.

Existing automated battery swap systems are mostly automated embedded battery swap systems, with the entire battery swap trolley being provided below the ground, and only one groove remaining above the ground for battery swapping at the bottom of the groove. Such an automated battery swap station cannot be moved, it requires advanced civil engineering, has a high construction cost, is inconvenient to maintain, is generally used indoors, cannot work outdoors under bad weather, and has a narrow scope of application.

### Summary of the Invention

The technical problem to be solved by the invention is to provide an automated battery swap system for an electric vehicle, wherein the automated battery swap system is composed of various parts that are small in size, light in weight, easy to install and convenient to transport, and the entire system is simple in structure, safe and reliable, easy to operate and implement, and can be widely promoted in various places.

In order to solve the above technical problem, the invention provides an automated battery swap system for an electric vehicle, the automated battery swap system comprising:
a battery swap platform for supporting and positioning a vehicle;
a hoisting device provided on the battery swap platform for hoisting the vehicle to a first preset height, the first preset height being the height of the vehicle, when in place for battery swapping, from the battery swap platform;
a battery pack management device provided on one side of the battery swap platform, for receiving a used battery pack and supplying a fresh battery pack;
a guide rail with one end extending into the battery swap platform and the other end extending to the battery pack management device; and
a battery swap trolley provided on the guide rail and capable of reciprocating along the guide rail to complete the transportation of a battery pack between the vehicle and the battery pack management device.

Further, the automated battery swap system further comprises a control module for coordinating and controlling the operation of each component of the automated battery swap system.

Further, provided that a travelling direction is an X-direction and a vehicle width direction is a Y-direction, the battery swap platform comprises:
a platform body for supporting the vehicle;
a ramp structure disposed at at least one end, in the X-direction, of the platform body; and
a guide structure provided at two ends, in the Y-direction, of the platform body; and
a positioning structure used to define a stop position for the vehicle and to position and adjust front and rear wheels of the vehicle so as to adjust the vehicle to a preset battery swap position.

Further, the battery swap platform comprises a front-wheel support module and a rear-wheel support module; a plurality of platform modules arranged in a vehicle length direction are provided between the front-wheel support module and the rear-wheel support module, with a gap provided between each two adjacent platform modules; and the gap is used for arrangement of a guide rail or a rack, the guide rail being used to provide a travelling track for the battery swap trolley to enter or leave the battery swap platform and determine the travelling direction of the battery swap trolley, and the rack being used to mesh with a gear on the battery swap trolley.

Further, the hoisting device comprises a plurality of lifting columns, each lifting column comprising a housing, a driving mechanism arranged in the housing and a lifting structure driven by the driving mechanism, and the driving mechanism drives the lifting structure to move in a vertical direction.

Further, the hoisting device further comprises a plurality of lifting push rods respectively used to support lift points of the vehicle, and the lifting push rods are in one-to-one correspondence with the lifting columns and are each driven to move in the vertical direction by the lifting structure of the corresponding lifting column.

Further, the battery swap trolley comprises a tightening mechanism capable of ascending and descending in a height direction, to ascend to a height allowing battery exchange with the vehicle for removing and installing battery packs.

Further, the hoisting device comprises:
a column structure fixedly connected to two ends, in a vehicle width direction, of the battery swap platform;
lifting robotic arms provided on the column structure and capable of ascending and descending in a height direction along the column structure to hoist the vehicle; and
support mechanisms for supporting vehicle lift points, each lifting robotic arm being correspondingly provided with the support mechanism.

Further, the hoisting device further comprises:
a synchronous lifting suspension chain respectively connected to the lifting robotic arms to drive all the lifting robotic arms to ascend and descend synchronously; and
a motor drive structure for driving the synchronous lifting suspension chain to enable the lifting robotic arms to synchronously perform lifting.

Further, the support mechanism is provided with a photographing and positioning mechanism, for photographing and positioning the vehicle and the battery swap trolley after the vehicle is lifted to the first preset height by the hoisting device and the battery swap trolley enters an area under the vehicle.

Further, the photographing and positioning mechanism comprises:
a photographing unit for photographing a positioning hole of a vehicle body and a positioning pin of the battery swap trolley to obtain photographic data;
a computing unit for computing a current vehicle position deviation according to the photographic data; and
a fine adjustment unit provided in the support mechanism, for adjusting the position of the vehicle according to the obtained vehicle position deviation.

Further, the fine adjustment unit comprises a driving portion and a floating portion which are arranged on different support mechanisms and are arranged along a travelling direction, wherein
the driving portion drives the corresponding support mechanism to move in the travelling direction so as to drive the vehicle to move, and
the floating portion is configured to float with the movement of the vehicle so as to adjust the position of the vehicle.

Further, the floating portion comprises:
a floating unit, a support unit and a restoring unit, wherein
the floating unit is used to float in a horizontal plane,
the floating unit and the support unit are in rolling contact with each other via universal balls, and
the restoring unit is connected to the floating unit for restoring the floating unit.

Further, the battery pack management device comprises:
a battery pack receiving and outputting unit for receiving a used battery pack conveyed by the battery swap trolley and outputting a fresh battery pack to the battery swap trolley;
a battery pack charging unit for charging a used battery pack;
a battery pack storage unit for storing a fresh battery pack and a used battery pack; and
a control unit for controlling the battery receiving and outputting unit to receive or output a battery pack, controlling the battery pack charging unit to charge a battery pack, and controlling the battery pack storage unit to store a battery pack.

Further, the battery pack management device further comprises a battery exchange port, through which the used battery pack is received and the fresh battery pack is output.

The invention has obvious advantages and beneficial effects as compared with the prior art. By means of the above technical solutions, an automated battery swap system for an electric vehicle of the invention can achieve considerable technical progress and practicality, has a wide range of industrial utility value, and has at least the following advantages.
(1) Various components of the automated battery swap system of the invention are independently provided, the components are small in size, light in weight and easy to install, and can be transported separately, and therefore, the entire system is simple in structure, reliable, easy to operate and implement, and convenient to transport, so that modularization and miniaturization are realized.
(2) All the processes can be completed automatically by means of a control device without the need of manual battery swapping, saving on manual labor.
(3) During the battery swap, the vehicle is coarsely positioned and then precisely positioned to improve the accuracy and efficiency of battery swapping.
(4) When the automated battery swap system is used for battery swapping, only two parking spaces are occupied, so that the system is applicable to all parking lots and most automobile repair stations, and can be widely applied to various places.

The aforementioned description is only an overview of the technical solutions of the invention. In order to clearly understand the technical means of the invention, the invention can be implemented according to the contents of the description; and in order to make the aforementioned and other objects, features and advantages of the invention more obvious and understandable, preferred embodiments are described in detail below with reference to the accompanying drawings.

### Brief Description of the Drawings

Fig. 1 is a schematic diagram of an automated battery swap system for an electric vehicle provided in an embodiment of the invention.
Fig. 2 is a schematic diagram of a battery swap platform of an automated battery swap system provided in an embodiment of the invention.
Fig. 3 is a partially enlarged view of a battery swap system of an automated battery swap system provided in an embodiment of the invention.
Fig. 4 is a schematic diagram of a battery pack management device of an automated battery swap system provided in an embodiment of the invention.
Fig. 5 is a schematic diagram of a photographing and positioning mechanism of an automated battery swap system provided in an embodiment of the invention.
Fig. 6 is a schematic diagram of a fine adjustment unit of an automated battery swap system provided in an embodiment of the invention.
Fig. 7 is a sectional view taken along A-A of Fig. 6.
Fig. 8 is a schematic diagram of an automated battery swap system provided in another embodiment of the invention.
Fig. 9 is a flow chart of an automated battery swap method for an electric vehicle provided in an embodiment of the invention.

**[Description of Symbols]**

| | |
|---|---|
| 1: Battery swap platform | 2: Hoisting device |
| 3: Battery pack management device | 4: Guide rail |
| 5: Battery swap trolley | |

### Detailed Description of Embodiments

In order to further illustrate the technical means used to achieve the intended purpose of the invention and the technical effects thereof, the implementation of an automated battery swap system for an electric vehicle proposed in the invention and the effects thereof are described in detail hereinafter in conjunction with the accompanying drawings and the preferred embodiments.

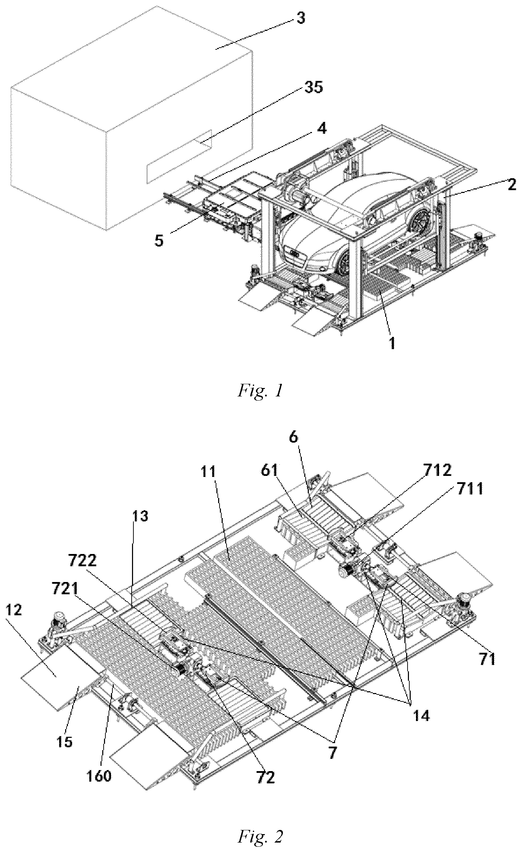

The invention provides an automated battery swap system for an electric vehicle. As shown in Fig. 1, the system comprises a battery swap platform 1, a hoisting device 2, a battery pack management device 3, a guide rail 4, and a battery swap trolley 5. The battery swap platform 1 is used for supporting and positioning a vehicle. The hoisting device 2 is provided on the battery swap platform 1 for hoisting the vehicle to a first preset height. The first preset height is the height of the vehicle, when in place for battery swapping, from the battery swap platform 1. The first preset height is set according to factors such as the model of the vehicle with a battery to be swapped.

It should be noted that, the first preset height is not limited to one height value, and may also be a height range, that is, the vehicle is allowed to be re-adjusted within a certain height range. For example, in some embodiments, the vehicle can be lifted to and maintained at a predetermined height first, and then the position of the battery swap trolley 5 is adjusted to perform the battery swap operation, in which case the predetermined height value is the first preset height. In other embodiments, the vehicle can be lifted to a certain position within the height range first, and then the vehicle is re-adjusted according to the position of the battery swap trolley 5 so as to ascend or descend in the height range to match the position of the battery swap trolley, in which case the height range is collectively referred to as the first preset height. In summary, the first preset height is not a fixed position, but a range of positions where the battery swapping can be implemented. The hoisting device 2 can subsequently adjust the height and horizontal position of the vehicle within the range of positions where the battery swapping can be implemented according to the hoisting height and horizontal position of the battery swap trolley 5, such that the vehicle and the battery swap trolley 5 are aligned for battery swapping, and this range of positions where the battery swapping can be implemented belongs to the first preset height.

The battery pack management device 3 is provided on one side of the battery swap platform 1 for receiving a used battery pack and supplying a fresh battery pack. One end of the guide rail 4 extends into the battery swap platform 1, and the other end thereof extends to the battery pack management device 3. The battery swap trolley 5 is provided on the guide rail 4 and can reciprocate along the guide rail 4 so as to complete the transportation of a battery pack between the vehicle and the battery pack management device.

It should be noted that the term "used battery pack" in the invention refers to a battery pack detached from a vehicle during a battery swap, and does not limit the battery pack detached from a vehicle to a completely drained state. In the same way, the term "fresh battery pack" refers to a battery pack installed to the vehicle during a battery swap, and does not limit the battery pack installed to the vehicle to a fully charged state.

The term "electric vehicle" in the invention generally refers to a vehicle having a swappable battery pack, and is not limited to a battery electric vehicle, and may also be a hybrid vehicle.

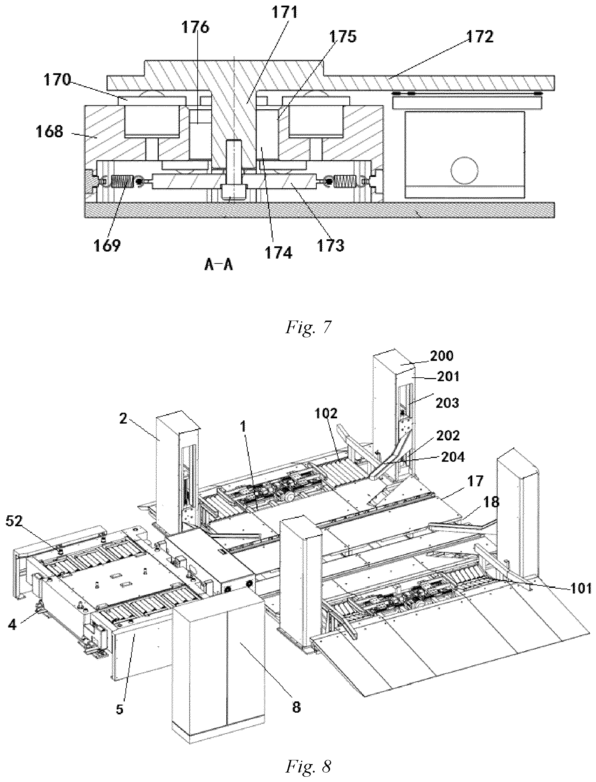

As shown in Fig. 8, the automated battery swap system further comprises a control module 8 (not shown in Fig. 1) for coordinating and controlling the operation of each component of the automated battery swap system. The control module 8 may be provided on the battery swap platform 1, and control each module of the battery swap system through wired, wireless or remote control, etc. The control module may also be provided separately in the battery swap system or on other components of the battery swap system, for example on the hoisting device 2. The control device 8 may comprise an electrical control cabinet and a power distribution cabinet.

The following sections respectively describe the components of the automated battery swap system in detail.

### (I) Battery Swap Platform

As shown in Fig. 2, the battery swap platform 1 comprises a platform body 11 for supporting a vehicle, a ramp structure 12 for guiding the vehicle to enter and exit the platform body 11, a guide structure 13 for guiding the vehicle when it enters the platform body 11, and a positioning structure 14 for defining a stop position of the vehicle on the platform body 11 and for positioning and adjusting front and rear wheels of the vehicle so as to adjust the vehicle to a preset battery swap position.

The platform body 11 is used to support the vehicle, allowing the vehicle to travel to a battery swap position. The gaps between the components of the platform body 11 may be filled with a fiber-reinforced plastic grille, which not only ensures the smooth entry of the vehicle into the battery swap platform 1, but also reduces the weight of the battery swap platform 1.

In the example shown in Fig. 2, the ramp structure 12 is provided at either end of the platform body 11 in the travelling direction, or may be provided at only one end thereof. The ramp structure 12 comprises a ramp body 15 and a spindle 160. The ramp body 15 is connected to the platform body 11 via the spindle 160 and is turned around the spindle 160 such that the ramp structure 12 is folded or deployed. When the vehicle enters and exits the battery swap platform 1, the ramp structure 12 is deployed; whereas in other cases, the ramp structure 12 can be folded to reduce the area occupied by the battery swap system.

The guide structure 13 corresponds to the ramp structure 12, is disposed on the platform body 11, and extends to the ramp structure 12. Specifically, the guide structure 13 comprises guide members arranged in pairs respectively at two ends of the platform body 11 in the vehicle width direction, and the space between the guide members at both ends is defined as an area that allows passage of the vehicle, thereby preventing the vehicle, during entering and exiting the platform body 11, from deviating from the trajectory and from falling off the platform body 11. As an example, the guide structure 13 consists of guide rods, and the extension direction of the guide rods is substantially parallel to the travelling direction. During the entry of a vehicle, the ramp structure 12 and the guide structure 13 can together be used as a reference for guiding the vehicle to enter the battery swap platform 1 in a forward direction, enabling the stop position to be closer to an ideal position.

After the vehicle enters the platform body 11, front and rear wheels of the vehicle are positioned and adjusted by means of the positioning structure 14, so as to adjust the vehicle to the preset battery swap position.

In the example shown in Fig. 2, the travelling direction is the X-direction and the vehicle width direction is the Y-direction. The positioning structure 14 comprises an X-direction positioning unit 6 for adjusting the position of the vehicle in the X-direction and a Y-direction positioning unit 7 for adjusting the position of the vehicle in the Y-direction.

The X-direction positioning unit 6 comprises grooves 61 for supporting wheels, which may be the front wheels or the rear wheels. The incoming vehicle is determined to be in the stop position in the X-direction when the wheels enter the grooves 61. A description will be given with the X-direction positioning unit 6 used for supporting the front wheels of the vehicle. The Y-direction positioning unit 7 comprises a front-wheel Y-direction positioning unit 71 and a rear-wheel Y-direction positioning unit 72 respectively arranged at positions corresponding to the front wheels and the rear wheels of the vehicle. The front-wheel Y-direction positioning unit 71 comprises a front-wheel push rod motor 711 and front-wheel push rods 712 provided at two ends of the front-wheel push rod motor 711 in the Y-direction; the front-wheel push rod motor 711 is used to drive the front-wheel push rods 712 to move; and the front-wheel push rods 712 are used to push the front wheels to move, so as to position the front wheels in the Y-direction. The rear-wheel Y-direction positioning unit 72 comprises a rear-wheel push rod motor 721 and rear-wheel push rods 722 disposed at two ends of the rear-wheel push rod motor 721 in the Y-direction; the rear-wheel push rod motor 721 is used to drive the rear-wheel push rods 722 to move; and the rear-wheel push rods 722 are used to push the rear wheels to move, so as to position the rear wheels in the Y-direction.

The battery swap platform 1 shown in Fig. 2 is only an example. The practical application is not limited to the aforementioned compositional structure. As a variant of the battery swap platform 1 shown in Fig. 2, the battery swap platform 1 can also be arranged in a modularized form, such as the battery swap platform 1 in an automated battery swap system for an electric vehicle shown in Fig. 8. The battery swap platform 1 comprises a front-wheel support module 101 and a rear-wheel support module 102. The front-wheel support module 101 and the rear-wheel support module 102 can be provided with the positioning structure 14. A plurality of platform modules 17 arranged in the vehicle length direction are provided between the front-wheel support module 101 and the rear-wheel support module 102. There is a gap 18 between each two adjacent platform modules 17, and the gap 18 is used to arrange a guide rail 4 or a rack. The guide rail 4 is used to provide a travelling track for a battery swap trolley 5 to enter or exit the battery swap platform 1 and determine a travelling direction of the battery swap trolley 5. The rack is used to mesh with a gear on the battery swap trolley to control the moving distance of the battery swap trolley 5. The battery swap platform 1 is modularly configured, so that each module can be disassembled and assembled independently for easy transportation and installation. It should be noted that the battery pack management device 3 is omitted in Fig. 8.

### (II) Hoisting Device

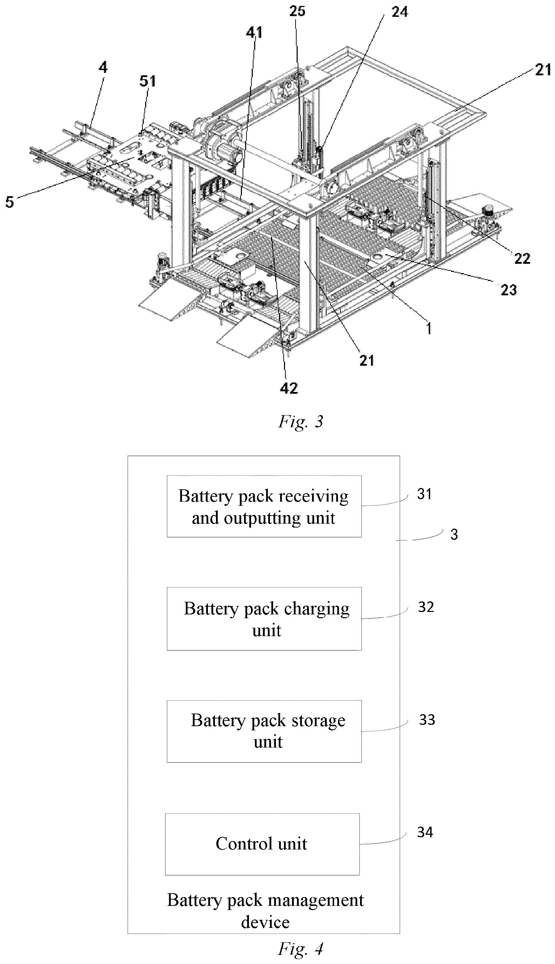

As shown in Fig. 3, the hoisting device 2 comprises: a column structure 21 for arranging lifting robotic arms 22, the lifting robotic arms 22 for hoisting the vehicle, and support mechanisms 23 for supporting vehicle lift points.

The column structure 21 is fixedly connected to two ends, in the vehicle width direction, of the battery swap platform 1. The column structure 21 is of a double-column structure or a four-column structure. In some embodiments, the column structure 21 comprises four columns, the battery swap platform 1 is of a rectangular structure, and the four columns are respectively provided at four corners of the battery swap platform 1. The lifting robotic arms 22 are provided on the column structure 21 and capable of ascending and descending in a height direction along the column structure 21 to hoist the vehicle. The support mechanisms 23 have a one-to-one correspondence with the lifting robotic arms 22, and the support mechanisms 23 are used to support the vehicle lift points.

The hoisting device 2 further comprises a synchronous lifting suspension chain 24 and a motor drive structure 25, wherein the synchronous lifting suspension chain 24 is respectively connected to the lifting robotic arms 22, so as to drive all the lifting robotic arms 22 to ascend and descend synchronously, ensuring that the vehicle is steadily lifted. The motor drive structure 25 is used to drive the synchronous lifting suspension chain 24, so as to enable the lifting robotic arms 22 to synchronously perform lifting. Existing hoisting devices use structures such as lead screw rods and hydraulic cylinders, which have a relatively poor synchronization. In the invention, the motor drive structure 25 and the synchronous lifting suspension chain 24 are used to ensure the synchronization and consistency of four hoisting points during the vehicle hoisting process.

The hoisting device 2 shown in Fig. 3 is only an example. The practical application is not limited to the above-mentioned compositional structure. As a variant of the hoisting device 2 shown in Fig. 2, a hoisting device 2 in the automatic battery swap system for an electric vehicle is shown in Fig. 8. The hoisting device 2 comprises a plurality of lifting columns 200. Each lifting column 200 comprises a housing 201, a driving mechanism 202 arranged in the housing 201 and a lifting structure 203 driven by the driving mechanism 202. The driving mechanism 202 drives the lifting structure 203 to move in the vertical direction. The hoisting device 2 further comprises a plurality of lifting push rods 204 for supporting the lift points of the vehicle respectively. The lifting push rods 204 are in one-to-one correspondence with the lifting columns 200 and are each driven by the lifting structure 203 of the corresponding lifting column 200 to move in the vertical direction.

In the example shown in Fig. 8, there are 4 lifting columns 200, which are uniformly distributed on two ends of the battery swap platform 1 in the vehicle width direction and respectively correspond to four wheels. Correspondingly, there are also 4 lifting push rods.

The lifting columns 200 are configured to be independently controlled, enabling multiple lifting columns 200 to be controlled synchronously. The multiple lifting columns 200 can also be separately controlled to compensate for the lift point unlevelness generated due to the weight deviation of the vehicle body. That is to say, when the heights of the lift points of the vehicle are deviated from each other, each lifting column 200 can be separately controlled to bring the plurality of lift points to the same height, thereby increasing the battery swapping accuracy.

In the example shown in Fig. 8, the battery swap trolley 5 comprises a tightening mechanism 52 capable of ascending and descending in a height direction so as to ascend to a height allowing battery exchange with the vehicle for removing and installing battery packs. The tightening mechanism 52 can be hoisted by way of providing a hoisting structure in the battery swap trolley 5. For the battery swap system shown in Fig. 8, during the battery swap process, the battery swap trolley 5 does not need to be lifted and lowered as a whole, and it is only necessary to raise the tightening mechanism 52 to a height allowing battery exchange with the vehicle in order to swap batteries for the vehicle, so that the battery swap process is simple and the battery swap efficiency is high.

### (III) Battery Pack Management Device

As shown in Fig. 4, the battery pack management device 3 comprises: a battery pack receiving and outputting unit 31, a battery pack charging unit 32, a battery pack storage unit 33 and a control unit 34, wherein the battery pack receiving and outputting unit 31 is used to receive a used battery pack conveyed by a battery swap trolley 5 and output a fresh battery pack to the battery swap trolley 5; The battery pack charging unit 32 is used to charge a used battery pack. The battery pack storage unit 33 is configured to store a fresh battery pack and a used battery pack and can manage multiple battery packs at the same time, and thus can complete battery swaps for multiple vehicles continuously without interruption, achieving a high battery swap efficiency. The control unit 34 is used to control the battery receiving and outputting unit 31 to receive or output a battery pack, to control the battery pack charging unit 32 to charge a battery pack, and to control the battery pack storage unit 33 to store a battery pack.

As shown in Fig. 1, the battery pack management device 3 further comprises a battery exchange port 35. Though the battery exchange port 35, the battery pack management device receives a used battery pack conveyed by the battery swap trolley 5 and outputs a fresh battery pack to the battery swap trolley 5.

### (IV) Guide Rail

As shown in Fig. 3, as an example, the extension direction of the guide rail 4 is perpendicular to the travelling direction of the vehicle entering and exiting the battery swap platform 1. However, it should be understood that the guide rail 4 serves as a path for the battery swap trolley 5 to enter and exit the battery swap platform 1, and the extension direction is intended to facilitate the entering and exiting of the battery swap trolley 5 and the battery swap operation, and can be adaptively adjusted.

The guide rail 4 comprises two track rails 41 arranged parallel to each other and a rack 42 parallel to the track rails 41. The track rails 41 extend from the battery pack management device 3 to the interior of the battery swap platform 1 for the reciprocating movement of the battery swap trolley 5 between the battery swap platform 1 and the battery pack management device 3. The rack 42 is provided at least in the battery swap platform 1 for engagement with a gear (not shown in the figure) provided on the battery swap trolley 5 to precisely control the moving distance of the battery swap trolley 5 on the battery swap platform 1 and to improve the positioning precision of the battery swap trolley 5. In other examples, the rack 42 can be correspondingly provided on the portion of the guide rail 13 close to the automated battery swap system 1 to precisely control the distance of the battery swap trolley 5 relative to the automated battery swap system 1. Alternatively, the rack 42 may also cover the length of the entire guide rail 13 to precisely control the moving distance of the battery swap trolley 5 over the entire walking path.

In the example shown in Fig. 3, the parts of the two track rails 41 that extend into the battery swap platform 1 and the rack 42 are embedded in the battery swap platform 1 and are in the same plane as the battery swap platform 1, thus ensuring smooth rolling of the vehicle and high control precision, and it is possible to reduce the time for battery swapping. The rack 42 on the battery swap trolley 5 not only enables the battery swap trolley 5 to enter the battery swap platform more quickly and accurately, but also controls the parking position of the battery swap trolley 5 according to the end position of the rack, thus improving the precision and efficiency of battery swapping.

### (V) Photographing and Positioning Mechanism

In some embodiments, after the vehicle is coarsely positioned by the battery swap platform 1, the hoisting device 2 lifts the vehicle to the first preset height. At this time, the position of the vehicle in the horizontal plane may be deviated from the accurate battery swap position to some extent. Therefore, a photographing and positioning mechanism 16 may be provided to further adjust the position of the vehicle, so as to increase the accuracy and efficiency of battery swapping. Specifically, the hoisting device 2 comprises four lifting robotic arms 22 and four corresponding support mechanisms 23 for respectively supporting four lift points of the vehicle. The support mechanism 23 is provided with a photographing and positioning mechanism 16. The photographing and positioning mechanism 16 photographs and positions the vehicle and the battery swap trolley, after the vehicle finishes positioning on the battery swap platform 1 and is lifted to the first preset height by the lifting device 12 and the battery swap trolley 5 enters an area under the vehicle. The battery swap trolley 5 is provided with a positioning pin 51 for cooperating with a positioning hole of the vehicle body so as to align the battery swap trolley 5 with the battery swap position.

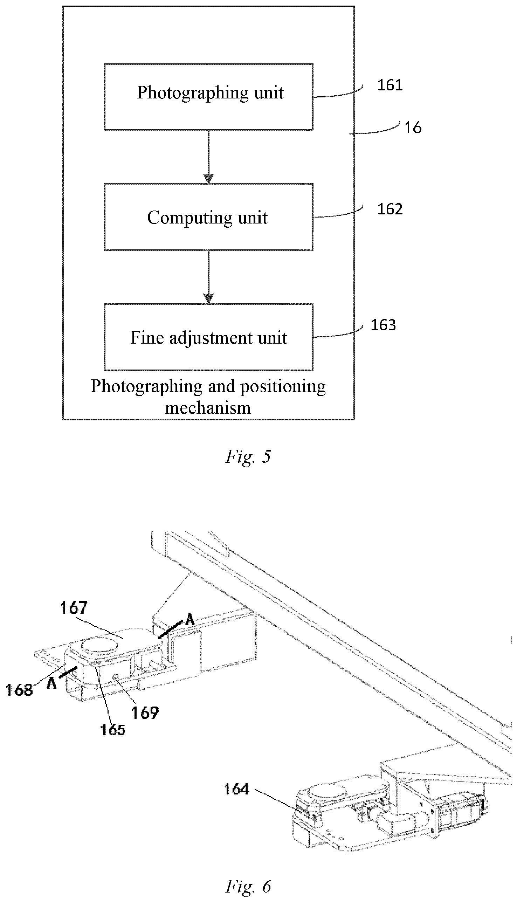

In the example shown in Fig. 5, the photographing and positioning mechanism 16 comprises a photographing unit 161, a computing unit 162, and a fine adjustment unit 163, wherein the photographing unit 161 is used to photograph the positioning hole of the vehicle body and the positioning pin 51 of the battery swap trolley 5 to obtain photographic data, and the photographing unit 161 may be a camera; the computing unit 162 is used to compute a current vehicle position deviation according to the photographic data; and the fine adjustment unit 163 is used to adjust the support mechanism 23 according to the obtained vehicle position deviation so as to adjust the position of the vehicle. In some other embodiments, the battery swap trolley 5 is provided with a floating mechanism which enables the battery swap trolley 5 to be adjusted in a horizontal plane so as to align the battery swap trolley 5 with the battery swap position. In this case, the photographing and positioning mechanism 16 may not be provided, if the amount by which the floating mechanism floats is sufficient to counteract the plane deviation between the battery swap trolley 5 and the vehicle. However, it is to be understood that, it is possible to provide both the photographing and positioning mechanism 16 and the floating mechanism, and the battery swap trolley 5 may be aligned with the battery swap position by adjusting the position of the vehicle in the horizontal plane and the position of the battery swap trolley 5 in the horizontal plane.

As shown in Fig. 6, the fine adjustment unit 163 comprises a driving portion 164 and a floating portion 165 which are arranged on different support mechanisms and are arranged along the travelling direction. The driving portion 164 drives the corresponding support mechanism 23 to move in the travelling direction, to move the corresponding vehicle lift point, so as to drive the vehicle to move. The floating portion 165 is configured to float with the movement of the vehicle so as to adjust the position of the vehicle, and the fine adjustment unit 163 comprises at least one driving portion 164. Other portions thereof in contact with the vehicle are all provided as floating portions 164 that float with the movement of the vehicle.

The floating portion 165 comprises: a floating unit 167, a support unit 168 and a restoring unit 169. The floating unit 167 is used to float in a horizontal plane. The floating unit 167 and the support unit 168 are in rolling contact via universal balls 170. The restoring unit 169 is connected to the floating unit 167 for restoring the floating unit 167.

As shown in Fig. 7, the floating unit 167 comprises: a connecting post 171, and a first floating plate 172 and a second floating plate 173 which are respectively connected to two ends of the connecting post 171 and are parallel to each other. The support unit 168 is provided with a through hole 174 for the connecting post 171 to pass through, the first floating plate 172 and the second floating plate 173 are respectively located outside the through hole 174 and are in rolling contact with the support unit 168 via the universal balls 170, and a floating gap 176 is provided between the connecting post 171 and a through-hole wall 175. At least one of the first floating plate 172 and the second floating plate 173 is provided with the restoring unit 169.

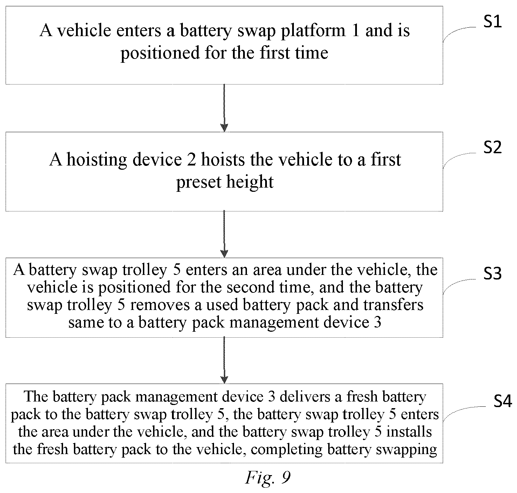

Based on the above-mentioned automated battery swap system, as shown in Fig. 8, when automated battery swapping is performed, the operation method comprises the following steps as shown in Fig. 9.

In step S 1, a vehicle enters the battery swap platform 1 and is positioned for the first time.

After the vehicle enters, the travelling direction is determined by means of the ramp structure 12 and the guide structure 13. The vehicle enters the battery swap platform 11 via the ramp structure 12. The ramp structure 12 can be personally arranged according to personal preferences of the user, the site, etc., at one end or two ends of the battery swap platform 1 in the travelling direction, such that the user can choose to drive the vehicle into the battery swap platform 1 in a forward direction or into the battery swap platform 1 in a reversed direction, thus further enhancing the user experience.

In step S2, the hoisting device 2 hoists the vehicle to a first preset height.

In step S3, an unloaded battery swap trolley 5 enters an area under the vehicle, the vehicle is positioned for the second time, and the battery swap trolley 5 removes a used battery pack and transfers the used battery pack to a battery pack management device 3.

It should be noted that, after entering the battery swap platform 1, the battery swap trolley 5 can come into contact with the vehicle chassis by lifting the battery swap trolley 5 as a whole, or by lifting the tightening mechanism 52 of the battery swap trolley 5. If the battery swap trolley 5 and the tightening mechanism 52 have a limited hoisting height which is not enough to bring the battery swap trolley 5 into contact with the vehicle chassis, the battery swap trolley 5 may be brought into contact with the vehicle by lowering the height of the vehicle to reach a precise battery swap position in the height direction.

In the horizontal plane, the second positioning process can be performed by the photographing and positioning mechanism 16 provided on the hoisting device 2, the process specifically comprising:
photographing a positioning hole of the vehicle body and a positioning pin of the battery swap trolley 5 to obtain photographic data;
computing a current vehicle position deviation according to the photographic data; and
adjusting the position of the vehicle according to the obtained vehicle position deviation.

Alternatively, the positioning of the battery swap trolley 5 in the horizontal plane is adjusted through a floating mechanism provided on the battery swap trolley 5, namely, for the second positioning. Alternatively, both the photographing and positioning mechanism 16 and the floating mechanism are provided, and the vehicle and the battery swap trolley 5 reach the accurate battery swap position in the horizontal plane by adjusting both the photographing and positioning mechanism 16 and the floating mechanism.

Performing the second positioning process improves the accuracy of battery swapping, and also prevents the occurrence of the situation where the positional error is greater than the threshold, causing the vehicle to be lowered again for the first positioning process, thus saving on the time for battery swapping, and improving the efficiency of battery swapping. In step S4, the battery pack management device 3 delivers a fresh battery pack to the battery swap trolley 5, and the battery swap trolley 5 enters the area under the vehicle and installs the fresh battery pack to the vehicle, completing the battery swapping.

It should be noted that in various implementations, the battery swap positions can all be reached by raising and lowering the vehicle or the battery swap trolley 5.

Various components of the automated battery swap system of the invention are independently provided, the components are small in size, light in weight and easy to install, and can be transported separately, and therefore, the entire system is simple in structure, reliable, easy to operate and implement, and convenient to transport, so that modularization and miniaturization are realized. During the battery swap, the vehicle is coarsely positioned and then precisely positioned to improve the accuracy and efficiency of battery swapping. In addition, the automated battery swap system 1 is applicable to all parking lots and most automobile repair stations, and can be widely applied to a variety of places. All the processes of the automated battery swap method of the invention can be completed automatically by means of a control device without the need of manual battery swapping, saving on manual labor with simple and easy operation during a battery swap, and improving the efficiency of battery swapping.

The foregoing descriptions are merely preferred embodiments of the invention, and are not intended to limit the invention in any form. Although the invention has been disclosed as above by means of the preferred embodiments, these embodiments are not for the purpose of limiting the invention. Those skilled in the art can make alterations or modifications to the technical contents disclosed above without departing from the technical solutions of the invention so as to arrive at equivalent embodiments with equivalent changes. However, any simple amendments, equivalent changes and modifications made to the above embodiments according to the technical essence of the invention without departing from the technical solutions of the invention are still within the scope of the technical solutions of the invention.

## Claims

1. An automated battery swap system for an electric vehicle, **characterized by** comprising:
a battery swap platform for supporting and positioning a vehicle;
a hoisting device provided on the battery swap platform for hoisting the vehicle to a first preset height, the first preset height being the height of the vehicle, when in place for battery swapping, from the battery swap platform;
a battery pack management device provided on one side of the battery swap platform, for receiving a used battery pack and supplying a fresh battery pack;
a guide rail with one end extending into the battery swap platform and the other end extending to the battery pack management device; and
a battery swap trolley provided on the guide rail and capable of reciprocating along the guide rail to complete the transportation of a battery pack between the vehicle and the battery pack management device.

2. The automated battery swap system for an electric vehicle according to claim 1, **characterized in that**
the automated battery swap system further comprises a control module for coordinating and controlling the operation of each component of the automated battery swap system.

3. The automated battery swap system for an electric vehicle according to claim 1, **characterized in that**
provided that a travelling direction is an X-direction and a vehicle width direction is a Y-direction, the battery swap platform comprises:
a platform body for supporting the vehicle;
a ramp structure disposed at at least one end, in the X-direction, of the platform body; and
a guide structure provided at two ends, in the Y-direction, of the platform body; and
a positioning structure used to define a stop position for the vehicle and to position and adjust front and rear wheels of the vehicle so as to adjust the vehicle to a preset battery swap position.

4. The automated battery swap system for an electric vehicle according to claim 1, **characterized in that**
the battery swap platform comprises a front-wheel support module and a rear-wheel support module; a plurality of platform modules arranged in a vehicle length direction are provided between the front-wheel support module and the rear-wheel support module, with a gap provided between each two adjacent platform modules; and the gap is used for arrangement of a guide rail or a rack, the guide rail being used to provide a travelling track for the battery swap trolley to enter or leave the battery swap platform and determine the travelling direction of the battery swap trolley, and the rack being used to mesh with a gear on the battery swap trolley.

5. The automated battery swap system for an electric vehicle according to claim 1 or 4, **characterized in that**
the hoisting device comprises a plurality of lifting columns, each lifting column comprising a housing, a driving mechanism arranged in the housing and a lifting structure driven by the driving mechanism, and the driving mechanism drives the lifting structure to move in a vertical direction.

6. The automated battery swap system for an electric vehicle according to claim 5, **characterized in that**
the hoisting device further comprises a plurality of lifting push rods respectively used to support lift points of the vehicle, and the lifting push rods are in one-to-one correspondence with the lifting columns and are each driven to move in the vertical direction by the lifting structure of the corresponding lifting column.

7. The automated battery swap system for an electric vehicle according to claim 1, **characterized in that**
the battery swap trolley comprises a tightening mechanism capable of ascending and descending in a height direction, to ascend to a height allowing battery exchange with the vehicle for removing and installing battery packs.

8. The automated battery swap system for an electric vehicle according to claim 1, **characterized in that**
the hoisting device comprises:
a column structure fixedly connected to two ends, in a vehicle width direction, of the battery swap platform;
lifting robotic arms provided on the column structure and capable of ascending and descending in a height direction along the column structure to hoist the vehicle; and
support mechanisms for supporting vehicle lift points, each lifting robotic arm being correspondingly provided with the support mechanism.

9. The automated battery swap system for an electric vehicle according to claim 8, **characterized in that**
the hoisting device further comprises:
a synchronous lifting suspension chain respectively connected to the lifting robotic arms to drive all the lifting robotic arms to ascend and descend synchronously; and
a motor drive structure for driving the synchronous lifting suspension chain to enable the lifting robotic arms to synchronously perform lifting.

10. The automated battery swap system for an electric vehicle according to claim 9, **characterized in that**
the support mechanism is provided with a photographing and positioning mechanism, for photographing and positioning the vehicle and the battery swap trolley after the vehicle is lifted to the first preset height by the hoisting device and the battery swap trolley enters an area under the vehicle.

11. The automated battery swap system for an electric vehicle according to claim 10, **characterized in that**
the photographing and positioning mechanism comprises:
a photographing unit for photographing a positioning hole of a vehicle body and a positioning pin of the battery swap trolley to obtain photographic data;
a computing unit for computing a current vehicle position deviation according to the photographic data; and
a fine adjustment unit provided in the support mechanism, for adjusting the position of the vehicle according to the obtained vehicle position deviation.

12. The automated battery swap system for an electric vehicle according to claim 1, **characterized in that**
the fine adjustment unit comprises a driving portion and a floating portion which are arranged on different support mechanisms and are arranged along a travelling direction, wherein
the driving portion drives the corresponding support mechanism to move in the travelling direction so as to drive the vehicle to move, and
the floating portion is configured to float with the movement of the vehicle so as to adjust the position of the vehicle.

13. The automated battery swap system for an electric vehicle according to claim 12, **characterized in that**
the floating portion comprises: a floating unit, a support unit and a restoring unit, wherein
the floating unit is used to float in a horizontal plane;
the floating unit and the support unit are in rolling contact with each other via universal balls; and
the restoring unit is connected to the floating unit for restoring the floating unit.

14. The automated battery swap system for an electric vehicle according to claim 1, **characterized in that**
the battery pack management device comprises:
a battery pack receiving and outputting unit for receiving a used battery pack conveyed by the battery swap trolley and outputting a fresh battery pack to the battery swap trolley;
a battery pack charging unit for charging a used battery pack;
a battery pack storage unit for storing a fresh battery pack and a used battery pack; and
a control unit for controlling the battery receiving and outputting unit to receive or output a battery pack, controlling the battery pack charging unit to charge a battery pack, and controlling the battery pack storage unit to store a battery pack.

15. The automated battery swap system for an electric vehicle according to claim 1, **characterized in that**
the battery pack management device further comprises a battery exchange port, through which the used battery pack is received and the fresh battery pack is output.
